(19) Europäisches Patentamt

European Patent Office

Office européen des brevets

(11) Publication number : **0 412 673 B1**

(12) **EUROPEAN PATENT SPECIFICATION**

(45) Date of publication of patent specification :
**09.03.94 Bulletin 94/10**

(21) Application number : **90307995.2**

(22) Date of filing : **20.07.90**

(51) Int. Cl.⁵ : **C04B 38/06,** B01D 39/20, C04B 35/80

(54) **Ceramic foam filters.**

The file contains technical information submitted after the application was filed and not included in this specification

(30) Priority : **08.08.89 GB 8918048**

(43) Date of publication of application :
**13.02.91 Bulletin 91/07**

(45) Publication of the grant of the patent :
**09.03.94 Bulletin 94/10**

(84) Designated Contracting States :
**BE DE ES FR GB IT**

(56) References cited :
**EP-A- 0 058 812**
**EP-A- 0 341 203**

(56) References cited :
**WO-A-88/07403**
**FR-A- 2 250 722**
**GB-A- 2 168 338**
**WORLD PATENTS INDEX LATEST Accession No 86-344226, Week 52 DERWENT PUBLICATIONS LTD, LONDON GB**

(73) Proprietor : **FOSECO INTERNATIONAL LIMITED**
**285 Long Acre**
**Nechells Birmingham B7 5JR (GB)**

(72) Inventor : **Azumi, Shingo**
**131, Saiwai-cho**
**Toyokawa-City 442 (JP)**

(74) Representative : **Eyles, Winifred Joyce**
**Foseco International Limited 285 Long Acre Nechells**
**Birmingham B7 5JR (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to ceramic foam filters, and particularly to ceramic foam filters for the filtration of molten iron.

Ceramic foam filters are commonly used for filtering a variety of molten metals, including aluminium, copper and iron.

The filters which were originally used for this purpose were principally phosphate bonded ceramic foams but due to the use of a phosphate binder, such as aluminium orthophosphate, these filters suffer from disadvantages, particularly when used for filtering iron, because the filters can have insufficient strength for handling when subjected to molten iron casting temperatures unless they are of thick section i.e. of the order of 20 mm or above. Furthermore phosphate binders are undesirable for environmental reasons because at the temperature at which the filters are fired during manufacture they evolve phosphorus pentoxide.

EP-A2-0341203 describes the production of a ceramic foam filter using a method which involves flocking an open cell flexible organic foam with fibres, such as alumino-silicate fibres, impregnating the flocked foam with a ceramic slurry containing for example at least 50% silicon-carbide, alumina, colloidal silica sol and montmorillonite and drying and firing the impregnated foam.

FR-A-2250722 describes a method of making a ceramic replica of a body of reticulated organic foam by impregnation with a slurry of finely-divided inorganic firbres, and drying and firing the impregnated foam.

WO-A-88/07403 describes a ceramic foam filter prepared from a slurry -containing at least 50% silicon carbide, at least 3% silica and optionally alumina.

It has now been found that improved filters for molten iron are obtained if the ceramic foam is made from a composition comprising silicon carbide, alumina, colloidal silica sol, and a minor proportion of alumino-silicate fibre.

According to the invention there is provided a ceramic foam filter formed from a composition comprising silicon carbide, alumina and silica derived from colloidal silica sol characterised in that the composition also contained alumino-silicate fibres and the filter has been fired at such a temperature that the filter has a ceramic matrix in which the alumino-silicate fibres are substantially dissolved.

The ceramic foam filter is preferably formed from an aqueous slurry having a solids content comprising 20 - 50% by weight silicon carbide, 20 - 50% by weight alumina, 1.5 - 5.0% by weight silica derived from colloidal silica sol and 1 - 3% by weight alumino-silicate fibres.

The particle size of the silicon carbide is preferably 1 to 80 $\mu$m (microns), and the particle size of the alumina is preferably 1 to 40 $\mu$m (microns). The alumino-silicate fibres preferably have a length of 60 $\mu$m (microns) to 3 mm. Colloidal silica sols are commercially available having a silica content in the range of 30 - 50% by weight. The aqueous slurry used to produce the filter of the invention will therefore usually contain from 5 to 10% by weight colloidal silica sol.

The ceramic foam filter may be made using a known method of making a ceramic foam in which an organic foam usually a polyurethane foam, is impregnated with an aqueous slurry of ceramic material containing a binder, the impregnated foam is dried to remove water and the dried impregnated foam is fired to burn off the organic foam to produce a ceramic foam. The production of ceramic foams by this method is described in United States Patent 3090094 and in British Patents 932862, 916784, 1004352, 1054421, 1377691, 1388911, 1388912 and 1388913.

During manufacture the ceramic foam filter of the invention must be fired at a minimum of 1150°C. Preferably the firing temperature is within the range of from 1200°C - 1300 °C.

According therefore to a further feature of the invention there is provided a method of making a ceramic foam filter comprising forming an aqueous slurry containing silica carbide, alumina, colloidal silica sol, and alumino-silicate fibres, impregnating an organic foam with the slurry, drying the impregnated foam to remove the water and firing the dried impregnated foam at a temperature of at least 1150°C.

When the filter is fired the colloidal silica, the alumino-silicate fibres and the finer particles of alumina interact to form a ceramic matrix surrounding the silicon carbide and the coarser alumina particles and having an aluminium silicate primary binder phase. Substantial dissolution of the alumino-silicate fibres in the ceramic matrix can be demonstrated by microscopic examination of the ceramic foam filter using a Scanning Electron Microscope (SEM).

The slurry may also contain other additives to improve the applicational properties of the slurry during impregnation of the organic foam. Examples of such additives are rheological agents, such as clay, fumed silica or organic thickening agents, coating aids, such as polyvinyl alcohol and antifoaming agents.

If desired the filters of the invention may be further improved by coating them with additional ceramic material of the same composition after drying and prior to firing the impregnated organic foam. When the filters are coated in this way the coating mass will usually constitute 5 - 10 % by weight of the finished filter.

The filters of the invention are stronger and less friable than phosphate-bonded silicon carbide filters and because they are stronger it is possible to use them as thinner sections i.e. of the order of 15 mm or below.

The following examples will serve to illustrate the invention.

EXAMPLE 1

Ceramic foam filters suitable for the filtration of molten iron were made as follows:-

An aqueous slurry of the following composition was prepared:-

|  | % By Weight |
|---|---|
| silicon carbide (particle size D50=25 μm (microns)) | 47.00 |
| alumina-(particle size D50=4 μm (microns)) | 25.00 |
| alumino-silicate fibres (length 3 mm) | 2.00 |
| clay | 3.00 |
| fumed silica | 2.50 |
| thickening agent | 0.05 |
| polyvinyl alcohol | 3.25 |
| colloidal silica sol (30% by weight silica) | 5.50 |
| antifoaming agent | 0.10 |
| water | 10.60 |

The silicon carbide, alumina, alumino-silicate fibres, clay, fumed silica and thickening agent were mixed together in a powder blender and transferred to a mixer. The polyvinyl alcohol and antifoaming agent were added, and the constituents were mixed. The colloidal silica sol was then added, followed by sufficient water to give a dough-like consistency on further mixing. The balance of the water was finally added and mixing continued to produce a slurry.

Reticulated flexible polyurethane foam pieces measuring 50 x 50 x 22 mm and 50 x 50 x 15mm were impregnated with the slurry, and after removal of excess slurry, the impregnated pieces were dried at 180 to 190°C for 1 hour, and then heated to 1200 °C and fired for 1 hour at that temperature.

The compression strength of the 22 mm thick filters was measured and found to be an average of 2.65 bar (2.7 kg/cm$^2$). Commercially available phosphate bonded silicon carbide based ceramic foam filters for iron of the same dimensions had an average compression strength of 1.47 bar (1.5 kg/cm$^2$).

Ten of the 15 mm thick filters were tested to assess their suitability for filtering molten iron by direct impingement of molten grey iron at a temperature of 1400°C from a height of 500 mm and all the filters passed the test.

In a similar impingement test 9 out of 10 phosphate bonded silicon carbide based ceramic foam filters of the same dimensions failed.

EXAMPLE 2

Ceramic foam filters were produced from reticulated flexible polyurethane foam pieces measuring 50 x 50 x 15 mm and from three different aqueous slurries using the method described in Example 1.

The slurries had the following percentage composition by weight:-

EP 0 412 673 B1

| | 1 | 2 | 3 |
|---|---|---|---|
| silicon carbide (particle size D50=25 μm (microns)) | 30.00 | 30.00 | 30.00 |
| alumina (particle size D50= 4 μm (microns)) | 43.00 | 42.00 | 42.00 |
| alumino-silicate fibres (average length 150 μm (microns)) | - | - | 1.00 |
| andalusite | - | 1.00 | - |
| clay | 3.00 | 3.00 | 3.00 |
| fumed silica | 2.00 | 2.00 | 2.00 |
| thickening agent | 0.05 | 0.05 | 0.05 |
| polyvinyl alcohol | 3.00 | 3.00 | 3.00 |
| antifoaming agent | 0.15 | 0.15 | 0.15 |
| colloidal silica sol (30% by weight silica) | 10.00 | 10.00 | 10.00 |
| water | 8.80 | 8.80 | 8.80 |

Filters produced from slurry 1 which contained no alumino-silicate fibres had an average compression strength of 1.41 bar (1.44 kg/cm$^2$); filters produced from slurry 2 which contained andalusite, a particulate aluminium silicate, instead of alumino-silicate fibres had an average compression strength of 1.08 bar (1.10 kg/cm$^2$), and filters containing alumino-silicate fibres according to the invention produced from slurry 3 had an average compression strength of 1.62 bar (1.65 kg/cm$^2$).

The filters from slurry 3 were 15% stronger than the filters from slurry 1 and 50% stronger than the filters from slurry 2.

## Claims

1. A ceramic foam filter formed from a composition comprising silicon carbide, alumina and silica derived from colloidal silica sol characterised in that the composition also contained alumino-silicate fibres and the filter has been fired at such a temperature that the filter has a ceramic matrix in which the alumino-silicate fibres are substantially dissolved.

2. A ceramic foam filter according to Claim 1 characterised in that the filter is formed from an aqueous slurry having a solids content comprising 20 -50% by weight silicon carbide, 20 - 50% by weight alumina, 1.5 - 5.0% by weight silica derived from colloidal silica sol and 1 -3% by weight alumino-silicate fibres.

3. A ceramic foam filter according to Claim 1 or Claim 2 characterised in that the silicon carbide has a particle size of 1 to 80 μm (microns).

4. A ceramic foam filter according to any one of Claims 1 to 3 characterised in that the alumina has a particle size of 1 - 40 μm (microns).

5. A ceramic foam filter according to any one of Claims 1 to 4 characterised in that the alumino-silicate fibres have a length of 60 μm (microns) to 3 mm.

6. A ceramic foam filter according to any one of Claims 1 to 5 characterised in that the filter has been fired

4

at a temperature within the range of from 1200°C - 1300 °C.

**7.** A ceramic foam filter according to any one of Claims 1 to 6 characterised in that the filter has a thickness of 15 mm or below.

**8.** A method of making a ceramic foam filter in which an organic foam is impregnated with an aqueous ceramic slurry, and the impregnated foam is dried and fired characterised in that the aqueous slurry contains silicon carbide, alumina, colloidal silica sol, and aluminosilicate fibres, and the dried impregnated foam is fired at a temperature of at least 1150°C.

**9.** A method according to Claim 8 characterised in that the dried impregnated foam is fired at a temperature within the range of from 1200°C - 1300°C.

## Patentansprüche

**1.** Keramisches Schaumfilter, gebildet aus einer Zusammensetzung enthaltend Siliciumcarbid, Aluminiumoxid und von kolloidalem Kieselsäuresol abgeleitetes Siliciumdioxid, dadurch gekennzeichnet, daß die Zusammensetzung ferner Aluminosilicatfasern enthielt und daß das Filter bei einer solchen Temperatur gebrannt wurde, daß es eine keramische Matrix aufweist, in der die Aluminosilicatfasern weitgehend aufgelöst sind.

**2.** Keramisches Schaumfilter nach Anspruch 1, dadurch gekennzeichnet, daß das Filter aus einer wäßrigen Aufschlämmung mit einem Feststoffgehalt aus 20-50 Gew.-% Siliciumcarbid, 20-50 Gew.-% Aluminiumoxid, 1,5-5,0 Gew.-% von kolloidalem Kieselsäuresol abgeleitetem Siliciumdioxid und 1-3 Gew.-% Aluminosilicatfasern gebildet wird.

**3.** Keramisches Schaumfilter nach Anspruch 1 oder 2, dadurch gekennzeichnet, daß das Siliciumcarbid eine Teilchengröße von 1 bis 80 μm (Mikron) besitzt.

**4.** Keramisches Schaumfilter nach einem der Ansprüche 1 bis 3, dadurch gekennzeichnet, daß das Aluminiumoxid eine Teilchengröße von 1-40 μm (Mikron) besitzt.

**5.** Keramisches Schaumfilter nach einem der Ansprüche 1 bis 4, dadurch gekennzeichnet, daß die Aluminosilicatfasern eine Länge von 60 μm (Mikron) bis 3 mm besitzen.

**6.** Keramisches Schaumfilter nach einem der Ansprüche 1 bis 5, dadurch gekennzeichnet, daß es bei einer Temperatur im Bereich von 1200°C-1300°C gebrannt wurde.

**7.** Keramisches Schaumfilter nach einem der Ansprüche 1 bis 6, dadurch gekennzeichnet, daß es eine Dicke von 15 mm oder weniger aufweist.

**8.** Verfahren zur Herstellung eines keramischen Schaumfilters, bei dem man einen organischen Schaum mit einer wäßrigen keramischen Aufschlämmung imprägniert und den imprägnierten Schaum trocknet und brennt, dadurch gekennzeichnet, daß die wäßrige Aufschlämmung Siliciumcarbid, Aluminiumoxid, kolloidales Kieselsäuresol und Aluminosilicatfasern enthält und daß man den getrockneten imprägnierten Schaum bei einer Temperatur von mindestens 1150°C brennt.

**9.** Verfahren nach Anspruch 8, dadurch gekennzeichnet, daß man den getrockneten imprägnierten Schaum bei einer Temperatur im Bereich von 1200°C-1300°C brennt.

## Revendications

**1.** Filtre en mousse de céramique formé d'une composition comprenant du carbure de silicium, de l'alumine et de la silice dérivée d'un sol de silice colloïdale, caractérisé en ce que la composition contient aussi des fibres d'aluminosilicate et le filtre a été cuit à une température telle que le filtre possède une matrice de céramique dans laquelle les fibres d'aluminosilicate sont pratiquement dissoutes.

**2.** Filtre en mousse de céramique selon la revendication 1, caractérisé en ce que le filtre est formé à partir d'un suspension aqueuse de teneur en matières solides comprenant 20-50% en poids de carbure de silicium, 20-50% en poids d'alumine, 1,5-5,0% en poids de silice dérivée d'un sol de silice colloïdale et 1-3% en poids de fibres d'aluminosilicate.

3. Filtre en mousse de céramique selon la revendication 1 ou 2, caractérisé en ce que le carbure de silicium possède une granulométrie de 1 à 80 μm (microns).

4. Filtre en mousse de céramique selon l'une quelconque des revendications 1 à 3, caractérisé en ce que l'alumine possède une granulométrie de 1 à 40 μm (microns).

5. Filtre en mousse de céramique selon l'une quelconque des revendications 1 à 4, caractérisé en ce que les fibres d'aluminosilicate ont une longueur de 60 μm (microns) à 3 mm.

6. Filtre en mousse de céramique selon l'une quelconque des revendications 1 à 5, caractérisé en ce que le filtre a été cuit à une température dans la gamme de 1200°C-1300°C.

7. Filtre en mousse de céramique selon l'une quelconque des revendications 1 à 6, caractérisé en ce que le filtre a une épaisseur de 15 mm ou moins.

8. Procédé de fabrication d'un filtre en mousse de céramique, dans lequel une mousse organique est imprégnée d'une suspension aqueuse, et la mousse imprégnée est séchée et cuite, caractérisé en ce que la suspension aqueuse contient du carbure de silicium, de l'alumine, un sol de silice colloïdale et des fibres d'aluminosilicate, et la mousse imprégnée séchée est cuite à une température d'au moins 1150°C.

9. Procédé selon la revendication 8, caractérisé en ce que la mousse imprégnée séchée est cuite à une température dans la gamme de 1200°C-1300°C.